# EUROPÄISCHE PATENTANMELDUNG

(11) **EP 4 672 194 A1**
(43) Veröffentlichungstag der Anmeldung: **31.12.2025**
(21) Anmeldenummer: 25185127.5
(22) Anmeldetag: 25.06.2025
(51) Int. Cl.: G08G 1/01, G08G 1/0962, G08G 1/0967, G08G 1/16, H04L 67/12, H04W 4/38, H04W 4/44

(54) **VERFAHREN ZUR INFORMATIONSZUFÜHRUNG AN EIN FAHRZEUG**

(30) Priorität: 25.06.2024 AT 505132024
(71) Anmelder: AVL List GmbH, 8020 Graz (AT)
(72) Erfinder: Lenk, David, 8041 Graz (AT); Schlömicher, Thomas, 8042 Graz (AT); Hemmer, Matthias, 8152 Stallhofen (AT)
(74) Vertreter: Babeluk Patentanwälte GmbH

(57) **Zusammenfassung**

Die Erfindung betrifft ein Verfahren zur Informationszuführung an ein Fahrzeug (1), wobei eine Fahrzeugelektronik (2) des Fahrzeugs (1) zumindest einen Parameter des Fahrzeugs (1) oder der Umgebung des Fahrzeugs (1), vorzugsweise umfassend seine Position, mittels zumindest eines Sensors (3) misst und mit einem Kommunikationsnetzwerk zur Informationsverteilung, umfassend zumindest zwei Server (6, 7), in Verbindung steht, wobei die Server (6, 7) untereinander Daten austauschen und von dem Fahrzeug (1) und zumindest einem weiteren Verkehrsobjekt (5, 5', 10) Daten empfangen und speichern sowie gespeicherte Daten von Verkehrsobjekten (1, 5, 5',10) an Verkehrsobjekte (1, 5, 5', 10) liefern. Dabei ist vorgesehen, dass zumindest ein erster Server (6) außerhalb des Fahrzeugs (1) angeordnet ist und zumindest ein zweiter Server (7) im oder am Fahrzeug (1) angeordnet ist, und dass der zweite Server (7) eine Lokalkopie zumindest eines Teils der Daten des ersten Servers (6) aufweist.

## Beschreibung

Die Erfindung betrifft ein Verfahren zur Informationszuführung an ein Fahrzeug, wobei eine Fahrzeugelektronik des Fahrzeugs zumindest einen Parameter des Fahrzeugs oder der Umgebung des Fahrzeugs, vorzugsweise umfassend seine Position, mittels zumindest eines Sensors misst und mit einem Kommunikationsnetzwerk zur Informationsverteilung, umfassend zumindest zwei Server, in Verbindung steht, wobei die Server untereinander Daten austauschen und von dem Fahrzeug und zumindest einem weiteren Verkehrsobjekt Daten empfangen und speichern sowie gespeicherte Daten von Verkehrsobjekten an Verkehrsobjekte liefern.

Sie betrifft auch ein Kommunikationsnetzwerk aufweisend zumindest zwei Server, zumindest ein Fahrzeug mit einer Fahrzeugelektronik und zumindest ein weiteres Verkehrsobjekt, welche untereinander zum Datentransfer verbunden sind, wobei die Server dazu eingerichtet sind, untereinander Daten auszutauschen und von dem Fahrzeug und zumindest einem weiteren Verkehrsobjekt Daten zu empfangen und zu speichern sowie gespeicherte Daten von Verkehrsobjekten an Verkehrsobjekte zu liefern, und wobei die Fahrzeugelektronik zumindest einen Sensor zur Erfassung zumindest eines Parameters des Fahrzeugs oder der Umgebung des Fahrzeugs, vorzugsweise dessen Position, aufweist.

Insbesondere im Bereich der autonom fahrenden Fahrzeuge sowie Fahrzeugen mit Fahrerassistenzsystemen (ADAS, Advanced Driver Assistance Systems) wird ein Fahrassistenzsystem als Teil einer Fahrzeugelektronik verwendet, welches die Steuerung des Fahrzeugs vornimmt oder unterstützt, wobei das Fahrassistenzsystem in der Regel Sensordaten von Sensoren des Fahrzeugs erhält als auch Daten von einem Kommunikationsnetzwerk. Die Sensoren des Fahrzeugs sind vor allem dazu eingerichtet, Daten über die unmittelbare Umgebung des Fahrzeugs sowie das Fahrzeug selbst zu sammeln, beispielsweise andere Verkehrsteilnehmer, Fahrstreifen und Straßenführungen zu erkennen, oder die Geschwindigkeit, Position und Bewegungsrichtung des Fahrzeugs zu überprüfen. Die Daten aus dem Kommunikationsnetzwerk können ebenso Verkehrsobjekte betreffen, beispielsweise deren Art, Position, Bewegungsrichtung und Bewegungsgeschwindigkeit, jedoch sind sie nicht durch die Reichweite der Sensoren begrenzt.

Solche Fahrassistenzsysteme können aber auch zur Unterstützung eines Fahrers dienen, indem es ihm Warnsignale oder Vorschläge mitteilt, um die Fahrt sicherer, effizienter oder angenehmer zu gestalten.

In der Regel wird die Ausgabe des Fahrassistenzsystems von den Daten beider Quellen, also des Sensors und des Kommunikationsnetzwerks, abhängig gemacht. Es erfolgt also die Verarbeitung von Daten beider Quellen. Dabei werden hochkomplexe Entscheidungen abhängig von den Datensätzen getroffen. Dazu gehören auch Situationen, in denen Daten unterschiedlicher Quellen nicht zusammenpassen.

Beide Datenquellen, die Sensorsysteme als auch das Kommunikationsnetzwerk, haben Nachteile oder Probleme. Während die Reichweite von Sensoren begrenzt ist und deren Erkennung fehlerhaft sein kann, können die Daten aus dem Kommunikationsnetzwerk unvollständig oder veraltet sein oder erst verzögert zum Fahrzeug gelangen, etwa bei einer schlechten Verbindung oder einer Überlastung des Netzwerkes. So kann es sein, dass ein Fahrzeug unterschiedliche Daten von den verschiedenen Datenquellen erhält oder einzelne Datenquellen gar ausfallen - etwa, wenn ein Sensor defekt ist oder wenn die Verbindung zum Kommunikationsnetzwerk abbricht.

Bei Tests von Fahrerassistenzsystemen und insbesondere von autonom fahrenden Fahrzeugen mit solchen werden oft einzelne Funktionen oder das Verhalten des Fahrassistenzsystems unter bestimmten Bedingungen bei Testfahrten beobachtet, um Fehler oder Probleme zu identifizieren und zu beheben, oder auch um das Fahrassistenzsystem einzustellen, es zu Validieren und/oder es zu Verifizieren.

Insbesondere während des Tests von autonom fahrenden Fahrzeugen sowie Fahrzeugen mit Fahrerassistenzsystemen ist dabei eine Zeitverzögerung bei der Kommunikation mit dem Netzwerk oder gar ein vorübergehendes Abbrechen der Verbindung in bestimmten Situationen störend, da dies zu einer unerwünschten Veränderung der Situation führen kann, die getestet werden soll. Da diese Fehler nicht gut vorhergesagt oder repliziert werden können, kann dies einen Test erschweren.

Aufgabe der Erfindung ist daher, ein Verfahren und ein Kommunikationsnetzwerk bereitzustellen, das eine verbesserte Testung einer Fahrzeugfunktion ermöglicht.

Diese Aufgabe wird erfindungsgemäß dadurch gelöst, dass zumindest ein erster Server außerhalb des Fahrzeugs angeordnet ist und zumindest ein zweiter Server im oder am Fahrzeug angeordnet ist, und dass der zweite Server eine Lokalkopie zumindest eines Teils der Daten des ersten Servers aufweist.

Sie wird auch dadurch gelöst, dass zumindest ein erster Server außerhalb des Fahrzeugs angeordnet ist und zumindest ein zweiter Server im oder am Fahrzeug angeordnet ist, und dass der zweite Server dazu eingerichtet ist, eine Lokalkopie zumindest eines Teils der Daten des ersten Servers anzufertigen und zu speichern.

Durch die Anordnung eines zweiten Servers im Fahrzeug wird erreicht, dass das Fahrzeug auch bei einer schlechten oder gar abgebrochenen Verbindung mit den Teilnehmern des Kommunikationsnetzwerks außerhalb des Fahrzeugs Daten aus der Lokalkopie des zweiten Servers entnehmen kann. Sobald die Verbindung wieder hergestellt ist oder sich verbessert hat, kann der zweite Server seine Lokalkopie wieder auf den neuesten Stand bringen. So kann dem Fahrassistenzsystem ein Datensatz zur Verfügung gestellt werden, der so weit wie möglich aktuell ist und Verzögerungen durch Verbindungsprobleme weitgehend vermindert werden.

Ein Vorteil der Erfindung kann auch darin gesehen werden, dass durch die Erfindung die zu testende Fahrzeugelektronik nicht wesentlich verändert werden muss. Es muss lediglich eine Schnittstelle zum zweiten Server vorgesehen sein. Dies ermöglicht es, den Test unter möglichst realitätsgetreuen Umständen durchzuführen.

Mit Lokalkopie ist dabei eine Kopie zumindest eines Teils des Datensatzes des ersten Servers auf dem zweiten Server gemeint. Die Lokalkopie umfasst vorzugsweise zumindest die Daten jener Verkehrsobjekte, die sich innerhalb eines definierten Bewegungsradius des Fahrzeuges befinden und/oder die sich innerhalb einer definierten Umgebung zumindest eines Teils einer definierten Route des Fahrzeugs befinden.

Mit im oder am Fahrzeug ist dabei gemeint, dass der zweite Server derart mit dem Fahrzeug verbunden ist, dass er sich mit dem Fahrzeug während der Fahrt im Verkehr mitbewegt. Er kann beispielsweise auf oder unter einem Sitz des Fahrzeugs, im Kofferraum, auf einer Ladefläche des Fahrzeugs oder auch auf oder in einem vom Fahrzeug gezogenen Anhänger angeordnet sein.

Der Parameter des Fahrzeugs oder der Umgebung des Fahrzeugs kann dabei ein Parameter, Wert oder auch eine Parametersammlung oder Wertsammlung umfassen. Beispielsweise sind Parameter des Fahrzeugs seine Geschwindigkeit, seine Position, Beschleunigung, Fahrtrichtung, Schwenkwinkel der Räder, Beleuchtungszustand des Fahrzeugs oder ähnliche. Beispielsweise sind Parameter der Umgebung andere erkannte Objekte in der Umgebung des Fahrzeugs, deren relative Position gegenüber dem Fahrzeug oder absolute Position, Entfernung, Art des Objekts, Ausrichtung, Bewegungsrichtung oder -beschleunigung. Parameter der Umgebung können auch abstrakte Werte wie die Ausleuchtung der Umgebung sein.

Der Sensor oder die Sensoren kann oder können dementsprechend ein LIDAR-, Kamera-, Stereokamera, Radar-, Infrarot-, GNSS- (mit und ohne RTK (Real-time kinematic positioning)), Geschwindigkeitsmess- und/oder Beschleunigungsmesssysteme umfassen.

Verkehrsobjekte können dabei sämtliche Objekte oder Subjekte oder deren Teile umfassen, die an dem Verkehr teilnehmen, ihn regeln, steuern oder anders beeinflussen. Beispielsweise sind andere Verkehrsteilnehmer wie andere Fahrzeuge oder Fußgänger Verkehrsobjekte. Aber auch Straßen, Fahrstreifen, Fahrstreifenmarkierungen, Verkehrsschilder, Ampeln oder andere Symbole wie Zebrastreifen können Verkehrsobjekte sein. Ebenso können Hindernisse, die den Verkehr beeinflussen, Verkehrsobjekte sein, beispielsweise Barrikaden, Absperrungen, Bäume, Steine und dergleichen.

Ein Server ist dabei im Sinne der Erfindung ein Computer, Computerteil oder eine Einrichtung umfassend zumindest einen Computer, der dazu eingerichtet ist, mit dem Fahrzeug oder anderen Verkehrsobjekten zumindest teilweise zu kommunizieren und Daten auszutauschen. In der Regel weist jeder Server zumindest eine Datenbank auf oder ist mit einer verbunden, in der Daten der Verkehrsobjekte gespeichert werden, damit diese durch andere Verkehrsobjekte wie das Fahrzeug abgerufen und an diese übertragen werden können.

Vorzugsweise weist die Fahrzeugelektronik zumindest eine Recheneinheit zur Verarbeitung von erhaltenen Daten, beispielsweise erhalten von den Sensoren, zumindest einem weiteren Verkehrsobjekt oder zumindest einem Server, auf. Diese kann dazu eingerichtet sein, auf Basis der erhaltenen Daten das Fahrzeug autonom oder zumindest halbautonom, also automatisch oder zumindest halbautomatisch zu steuern. Dazu kann die Fahrzeugelektronik einen Speicher zur vorübergehenden Speicherung von erhaltenen Daten und sonstigen Informationen wie Steuerungsanweisungen für das Fahrzeug aufweisen.

Während der erste und zweite Server als vollständige Datenserver zur Bereitstellung und Speicherung von Daten vieler verschiedener Verkehrsobjekte eingerichtet sind, unterscheidet sich der Speicher der Fahrzeugelektronik dahingehend von den ersten und zweiten Servern, als dass er dazu eingerichtet ist, im Wesentlichen nur die für das Fahrzeug relevanten Daten zu speichern. Dabei werden laufend neue Daten, die für die momentane und/oder zukünftige Verkehrssituation relevant sind, im Speicher der Fahrzeugelektronik gespeichert und alte Daten, die für die momentane und/oder zukünftige Verkehrssituation nicht mehr relevant sind - etwa von Verkehrsobjekten, die bereits passiert wurden und sich zunehmend entfernen - gelöscht.

Der zweite Server kann ein von der Fahrzeugelektronik - und/oder von dessen Speicher sofern vorgesehen - verschiedener Server sein. Das bedeutet, dass diese Bauteile getrennt voneinander ausgeführt sind. Während die Fahrzeugelektronik in dem Fahrzeug fest verbaut und dem Fahrzeug zugeordnet ist, ist der zweite Server lediglich in oder an dem Fahrzeug angeordnet, jedoch nicht notwendigerweise Teil der Fahrzeugelektronik. Die Fahrzeugelektronik ist vorzugsweise dazu eingerichtet, das Fahrzeug unabhängig vom zweiten Server automatisch oder zumindest halbautomatisch zu steuern.

Das Fahrzeug kann zur Kommunikation mit dem ersten Server und/oder anderen Verkehrsobjekten zumindest eine Kommunikationseinheit aufweisen, welche mit der Fahrzeugelektronik verbunden ist.

Vorzugsweise ist vorgesehen, dass der erste Server und der zweite Server jeweils zumindest eine Datenspeichereinheit zum Speichern von empfangenen Daten umfassen. Diese Datenspeichereinheit kann eine interne oder eine externe Einheit des Servers sein. In diesem Sinne ist auch vorteilhaft, wenn der erste Server und der zweite Server jeweils zumindest eine Datenspeichereinheit zum Speichern von empfangenen Daten umfassen.

Besonders vorteilhaft ist, wenn der zweite Server die gespeicherten Daten des ersten Servers spiegelt. Mit spiegeln ist dabei gemeint, dass der Datensatz des zweiten Servers im Wesentlichen dem Datensatz des ersten Servers entspricht. Mit anderen Worten wird also laufend versucht, den gleichen Datensatz auf dem ersten wie auf dem zweiten Server verfügbar zu haben.

Weiters ist vorteilhaft, wenn vorgesehen ist, dass der zweite Server die Daten des ersten Servers, vorzugsweise kontinuierlich oder intermittierend, zumindest teilweise vergleicht, kopiert und/oder aktualisiert, solange der erste Server und der zweite Server in Verbindung stehen. Dies ermöglicht einen möglichst gleichen Datensatz auf beiden Servern und die Zurverfügungstellung möglichst aktueller Daten durch den zweiten Server, wenn die Verbindung zum ersten Server abgebrochen ist. Das intermittierende Vergleichen, Kopieren und/oder Aktualisieren kann dabei in regelmäßigen Zeitabständen getriggert oder bestimmt durch bestimmte Ereignisse und/oder abhängig von bestimmten Parametern, beispielsweise der Verbindungsqualität erfolgen.

Besonders vorteilhaft ist, wenn die Fahrzeugelektronik mit dem zweiten Server über eine drahtlose Verbindung oder eine Datenleitung verbunden ist. Eine Datenleitung wie ein oder mehrere Datenkabel ermöglichen eine sichere und schnelle Verbindung. Eine drahtlose Verbindung kann insbesondere dann vorteilhaft sein, wenn eine Datenleitung aufgrund der Anordnung des Servers an oder in dem Fahrzeug schwierig verlegbar ist, beispielsweise wenn der Server an einem Anhänger geführt wird. In diesem Sinne ist auch vorteilhaft, wenn vorgesehen ist, dass die Fahrzeugelektronik mit dem zweiten Server über zumindest eine Datenleitung verbunden ist.

Weiters ist vorteilhaft, wenn der erste Server und der zweite Server drahtlos miteinander verbunden sind. Dies ermöglicht eine möglichst freie Bewegung des Fahrzeugs während der Fahrt.

Wenn vorgesehen ist, dass zumindest zwei Netzwerkteilnehmer, ausgewählt aus dem ersten Server, zweiten Server und/oder zumindest eines Verkehrsobjekts, abhängig von ihrer Distanz zueinander entweder mittels eines ersten drahtlosen Funkstandards und/oder zumindest eines weiteren drahtlosen Funkstandards kommunizieren, so kann ein möglichst schneller und sicherer Datenaustausch erfolgen. Das zumindest eine Verkehrsobjekt umfasst vorzugsweise die Fahrzeugelektronik des Fahrzeugs, das das Fahrassistenzsystem umfasst. Durch das Vorsehen mehrerer Funkstandards kann abhängig von den Verbindungsstärken der unterschiedlichen Verbindungsstandards der momentan vorteilhaftere Standard gewählt werden oder beide Verbindungsstandards gleichzeitig verwendet werden. So wird eine möglichst schnelle und vollständige Datenübertragung erreicht. Dabei kann auch vorgesehen sein, dass zwei Verkehrsobjekte, beispielsweise das Fahrzeug und ein weiterer Verkehrsteilnehmer, abhängig von ihrer Distanz zueinander entweder mittels eines ersten drahtlosen Funkstandards und/oder zumindest eines weiteren drahtlosen Funkstandards kommunizieren. In diesem Sinne ist auch vorteilhaft, wenn vorgesehen ist, dass der erste Server und der zweite Server über eine drahtlose Verbindung verbunden oder verbindbar sind und dass der erste Server und der zweite Server vorzugsweise jeweils Kommunikationseinheiten zur Kommunikation untereinander und/oder zur Kommunikation mit Verkehrsobjekten aufweisen. Die Kommunikationseinheiten können zur Kommunikation über unterschiedliche Funkstandards, beispielsweise einem Nahfunkstandard und/oder einem Fernfunkstandard ausgeführt sein.

Weiters ist vorteilhaft, wenn vorgesehen ist, dass der erste Funkstandard ein Nahfunkstandard ist und vorzugsweise zumindest einen der folgenden Funkstandards umfasst: WLAN und/oder Bluetooth, und/oder dass zumindest ein weiterer Funkstandard ein Fernfunkstandard ist und vorzugsweise zumindest einen Mobilfunkstandard wie GSM, UMTS, LTE, 5G oder 6G umfasst. Mit Nahfunkstandard ist ein Funkstandard gemeint, der dazu ausgelegt ist, über nahe Distanzen, in der Regel im Bereich von unter 100 Metern, zu funktionieren. Mit Fernfunkstandard ist ein Standard gemeint, der dazu ausgelegt ist, über ferne Distanzen, in der Regel im Bereich über 100 Metern, zu funktionieren.

Weiters kann vorgesehen sein, dass zumindest ein Verkehrsobjekt, vorzugsweise das Fahrzeug mittels der Fahrzeugelektronik, Daten von zumindest einem Server, vorzugsweise wahlweise von beiden Servern, anfragen und/oder empfangen kann. Dabei kann zumindest einem Verkehrsobjekt bestimmte Berechtigungen zugewiesen werden. Beispielsweise kann ein Fahrzeug dazu berechtigt werden, nur Daten von Verkehrsobjekten innerhalb einer bestimmten Entfernung anzufragen und zu erhalten. Alternativ oder zusätzlich kann auch vorgesehen sein, dass zumindest ein Server zumindest einem bestimmten Verkehrsobjekt Daten ungefragt übermittelt. Beispielsweise kann vorgesehen sein, dass der Server Daten über sämtliche anderer Verkehrsobjekte innerhalb einer bestimmten Distanz zum Verkehrsobjekt übermittelt.

Es kann vorgesehen sein, dass zumindest zwei Netzwerkteilnehmer, ausgewählt aus dem ersten Server, zweiten Server und/oder zumindest eines Verkehrsobjekts, vorzugsweise alle Netzwerkteilnehmer, mittels MQTT miteinander kommunizieren. Dies ermöglicht eine besonders effiziente und schnelle Kommunikation zwischen den Netzwerkteilnehmern. MQTT (Message Queuing Telemetry Transport) hat sich als besonders effizientes Protokoll für diese Art der Datenübertragung herausgestellt. Es kann vorgesehen sein, dass zumindest ein Server, vorzugsweise alle Server als MQTT-Broker arbeiten und/oder ausgeführt sind. Dies ermöglicht eine schnelle Datenübertragung zwischen Verkehrsobjekten und dem zumindest einen Server.

Weiters kann vorgesehen sein, dass die Fahrzeugelektronik die Position des Fahrzeugs mit Echtzeitkinematik, auch bekannt als Real-time kinematic positioning (RTK), bestimmt. Dies ermöglicht eine besonders genaue und aktuelle Positionsbestimmung. Real-time kinematic positioning oder Echtzeitkinematik umfasst die Positionsbestimmung von einer Basisstation mit bekannter tatsächlicher Position in Abhängigkeit mehrerer Positionierungssatelliten. Die Basisstation berechnet die Abweichung der ermittelten Position durch die Satellitendaten zur tatsächlichen Position und überträgt die Abweichungskorrektur an das Fahrzeug, das ebenso eine Positionsbestimmung in Abhängigkeit mehrerer Positionierungssatelliten durchführt und diese anhand der Korrekturdaten verbessert und/oder korrigiert. In diesem Sinne ist auch vorteilhaft, wenn vorgesehen ist, dass der zumindest eine Sensor zumindest ein GNSS-Modul umfasst und vorzugsweise zur Positionsbestimmung mittels Echtzeitkinematik (RTK) eingerichtet ist.

Besonders vorteilhaft ist, wenn zumindest zwei Verkehrsobjekte untereinander direkt Daten austauschen können. Dies ermöglicht insbesondere bei besonders nahen Verkehrsobjekten eine besonders schnelle und einfache Kommunikation.

Weiters kann vorgesehen sein, dass die Lokalkopie des zweiten Servers die Daten jener Verkehrsobjekte umfasst, die innerhalb einer definierten Entfernung zum Fahrzeug und/oder innerhalb eines definierten Bewegungsradius des Fahrzeugs liegen. Dies ermöglicht es dem Fahrzeug, auf die für es momentan besonders relevanten Daten zugreifen zu können, wenn die Verbindung zum ersten Server vorübergehend abbricht.

Besonders vorteilhaft ist, wenn die Fahrzeugelektronik das Fahrzeug auf Basis von den empfangenen Daten automatisch oder teilautomatisch steuert. Durch die automatische oder teilautomatische Steuerung kann die Fahrt weiter optimiert werden. Mit teilautomatisch ist gemeint, dass der Fahrer nach wie vor die Kontrolle über das Fahrzeug hat, das Fahrassistenzsystem jedoch gegebenenfalls in die Steuerung des Fahrzeugs eingreifen kann, beispielsweise in Form einer Lenkkorrektur zum Halten eines gewählten Fahrstreifens.

Es kann auch vorgesehen sein, dass die Fahrzeugelektronik das Fahrzeug auf Basis der Messdaten des zumindest einen Sensors automatisch oder teilautomatisch steuert.

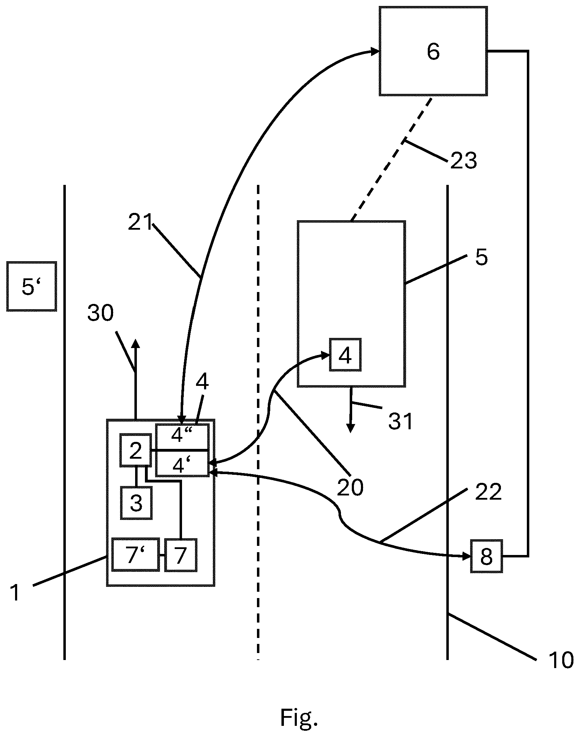

In weiterer Folge wird die Erfindung anhand einer nicht einschränkenden Ausführungsform in der Figur erläutert. Es zeigt die Figur:
Ein erfindungsgemäßes Kommunikationsnetzwerk in einer schematischen Ansicht.

In der Figur wird ein Kommunikationsnetzwerk mit einem Fahrzeug 1 gezeigt, dass das erfindungsgemäße Verfahren durchführt. Das Fahrzeug 1 befindet sich auf einer Testfahrt entlang einer Straße 10 und bewegt sich mit einer bestimmten Geschwindigkeit in eine Richtung (angezeigt durch Pfeil 30) entlang seiner Längsachse. Während der Fahrt wird von einer Fahrzeugelektronik 2 von Sensoren 3 die umliegenden realen Verkehrsobjekte, wie beispielsweise die Straße 10, deren Fahrstreifen und dazugehörigen Streifenmarkierungen erkannt. Durch den Sensor 3 wird auch ein ebenso auf der Straße 10 befindliches, reales Verkehrsobjekt 5 in Form eines anderen fahrenden Fahrzeugs erkannt, das ebenso in entgegengesetzte Richtung (angezeigt durch Pfeil 31) mit einer anderen Geschwindigkeit fährt.

Die Fahrzeugelektronik 2 ist mit einer Kommunikationseinheit 4 verbunden, welche eine Nahfunkeinheit 4' umfassend ein V2V-System aufweist und mittels dem die Kommunikationseinheit 4 mit dem anderen Verkehrsobjekt 5 direkt kommuniziert, da dieses ebenso eine Kommunikationseinheit 4 aufweist, dargestellt durch Pfeil 20. Die Kommunikationseinheit 4 weist ebenso eine Fernfunkeinheit 4" auf. Über diese Fernfunkeinheit 4" kann die Kommunikationseinheit 4 mit einem ersten Server 6 kommunizieren, der in einer Verkehrszentrale angeordnet ist (dargestellt durch Pfeil 21).

Es kann vorgesehen sein, dass die Nahfunkeinheit 4' auch dazu eingerichtet ist, mit dem ersten Server 6 zu kommunizieren, etwa wenn sich das Fahrzeug 1 in der Nähe von einer entsprechenden anderen Nahfunkeinheit eines Netzwerkzugangs befindet. Beispielsweise kann dies über eine WLAN-Verbindung mit einem WLAN-Router 8 als Nahfunkeinheit erfolgen, dargestellt durch Pfeil 22. Diese Verbindung kann dann statt oder zusätzlich zu der Verbindung via der Fernfunkeinheit 4" erfolgen.

Die Nahfunkeinheit 4' und Fernfunkeinheit 4" können als voneinander unabhängige Einheiten ausgeführt sein.

Über die Kommunikation mit dem Verkehrsobjekt 5 sowie über die Kommunikation mit dem ersten Server 6 kann die Fahrzeugelektronik 2 Daten über das Verkehrsobjekt 5 sowie über andere Verkehrsobjekte 5', 10 erhalten.

Des Weiteren befindet sich an der Straße 10 ein weiteres Verkehrsobjekt 5' in Form eines Verkehrsschildes. Dieses Verkehrsschild hat wie die Straße 10 keine Kommunikationseinheit, ist jedoch im Datensatz des ersten Servers 6 verzeichnet, wodurch das Fahrzeug 1 nur durch den Sensor 3 und/oder die Daten des ersten Servers 6 von dem weiteren Verkehrsobjekt 5' erfahren kann.

Die Fahrzeugelektronik 2 umfasst ein Fahrassistenzsystem, das auf Basis der Daten vom Sensor 3 und den anderen Teilnehmern des Kommunikationsnetzwerks, also den Servern 6, 7 sowie dem Verkehrsobjekt 5, das Fahrzeug 1 steuert.

Im Fahrzeug 1 ist ein zweiter Server 7 angeordnet, welcher mit der Fahrzeugelektronik 2 verbunden ist und damit ebenso mit der Fahrzeugelektronik 2 kommunizieren kann. Der zweite Server 7 kommuniziert ebenso mit dem ersten Server 6 über die Kommunikationseinheit 4 des Fahrzeugs 1. Es kann stattdessen oder zusätzlich vorgesehen sein, dass der zweite Server 7 zumindest eine weitere Kommunikationseinheit zur Kommunikation mit dem ersten Server 6 aufweist und/oder dass er über eine weitere Kommunikationseinheit mit dem ersten Server 6 kommuniziert.

Der zweite Server 7 und der erste Server 6 sind beide als MQTT-Broker eingerichtet, wobei der zweite Server 7 laufend die Daten des ersten Servers 6 spiegelt und in einem lokalen Datenspeicher 7' hinterlegt. Wenn die Verbindungen 21, 22 des Fahrzeugs 1 zum ersten Server 6 unterbrochen oder stark verlangsamt werden, etwa wegen einer Tunnelfahrt oder ähnlichem, so kann die Fahrzeugelektronik 2 keine oder nur unzureichende Daten mehr vom ersten Server 6 empfangen. Durch die gespiegelten Daten am zweiten Server 7 kann jedoch weiterhin auf die Daten zugegriffen werden. So kann die Fahrzeugelektronik 2 weiterhin möglichst viele Daten über Verkehrsobjekte 5, 5', 10 abrufen, ohne bloß auf den Sensor 3 oder direkte Daten von kommunizierenden Verkehrsobjekten 5 angewiesen zu sein. Falls die Direktverbindung zwischen dem Fahrzeug 1 und dem Verkehrsobjekt 5 entsprechend dem Pfeil 20 nicht mehr funktioniert, werden die Daten vom Fahrzeug 1 über den mit dem mit dem Pfeil 21 dargestellten Pfad zum Server 6 übertragen und anschließend vom Server 6 per Fernkommunikation 23 zum Fahrzeug 5 übertragen.

## Patentansprüche

1. Verfahren zur Informationszuführung an ein Fahrzeug (1), wobei eine Fahrzeugelektronik (2) des Fahrzeugs (1) zumindest einen Parameter des Fahrzeugs (1) oder der Umgebung des Fahrzeugs (1), vorzugsweise umfassend seine Position, mittels zumindest eines Sensors (3) misst und mit einem Kommunikationsnetzwerk zur Informationsverteilung, umfassend zumindest zwei Server (6,7), in Verbindung steht, wobei die Server (6, 7) untereinander Daten austauschen und von dem Fahrzeug (1) und zumindest einem weiteren Verkehrsobjekt (5, 5', 10) Daten empfangen und speichern sowie gespeicherte Daten von Verkehrsobjekten (1, 5, 5',10) an Verkehrsobjekte (1, 5, 5',10) liefern, **dadurch gekennzeichnet, dass** zumindest ein erster Server (6) außerhalb des Fahrzeugs (1) angeordnet ist und zumindest ein zweiter Server (7) im oder am Fahrzeug (1) angeordnet ist, und dass der zweite Server (7) eine Lokalkopie zumindest eines Teils der Daten des ersten Servers (6) aufweist.

2. Verfahren nach Anspruch 1, **dadurch gekennzeichnet, dass** der erste Server (6) und/oder der zweite Server (7) jeweils zumindest eine Datenspeichereinheit (7') zum Speichern von empfangenen Daten umfassen.

3. Verfahren nach Anspruch 1 oder 2, **dadurch gekennzeichnet, dass** der zweite Server (7) die gespeicherten Daten des ersten Servers (6) spiegelt.

4. Verfahren nach einem der Ansprüche 1 bis 3, **dadurch gekennzeichnet, dass** der zweite Server (7) die Daten des ersten Servers (6), vorzugsweise kontinuierlich oder intermittierend, zumindest teilweise kopiert und/oder aktualisiert, solange der erste Server (6) und der zweite Server (7) in Verbindung stehen.

5. Verfahren nach einem der Ansprüche 1 bis 4, **dadurch gekennzeichnet, dass** die Fahrzeugelektronik (2) mit dem zweiten Server (7) über eine drahtlose Verbindung und/oder eine Datenleitung verbunden ist.

6. Verfahren nach einem der Ansprüche 1 bis 5, **dadurch gekennzeichnet, dass** zumindest zwei Netzwerkteilnehmer (1, 5, 6, 7), ausgewählt aus dem ersten Server (6), zweiten Server (7) und/oder zumindest eines Verkehrsobjekts (1, 5), abhängig von ihrer Distanz zueinander entweder mittels eines ersten drahtlosen Funkstandards und/oder zumindest eines weiteren drahtlosen Funkstandards kommunizieren.

7. Verfahren nach einem der Ansprüche 1 bis 6, **dadurch gekennzeichnet, dass** zumindest ein Verkehrsobjekt (1, 5, 5', 10), vorzugsweise das Fahrzeug (1) mittels der Fahrzeugelektronik (2), Daten von zumindest einem Server (6, 7), vorzugsweise wahlweise von beiden Servern (6, 7), anfragen und/oder empfangen kann.

8. Verfahren nach einem der Ansprüche 1 bis 7, **dadurch gekennzeichnet, dass** zumindest zwei Netzwerkteilnehmer (1, 5, 5', 6, 7, 10), ausgewählt aus dem ersten Server (6), zweiten Server (7) und/oder zumindest eines Verkehrsobjekts (1, 5, 5', 10), vorzugsweise alle Netzwerkteilnehmer (1, 5, 5', 6, 7, 10), mittels MQTT miteinander kommunizieren.

9. Verfahren nach einem der Ansprüche 1 bis 8, **dadurch gekennzeichnet, dass** die Lokalkopie des zweiten Servers (7) die Daten jener Verkehrsobjekte (1, 5, 5', 10) umfasst, die innerhalb einer definierten Entfernung zum Fahrzeug (1) und/oder innerhalb eines definierten Bewegungsradius des Fahrzeugs (1) liegen.

10. Verfahren nach einem der Ansprüche 1 bis 9, **dadurch gekennzeichnet, dass** die Fahrzeugelektronik (2) das Fahrzeug (1) auf Basis von den empfangenen Daten automatisch oder teilautomatisch steuert.

11. Kommunikationsnetzwerk aufweisend zumindest zwei Server (6, 7), zumindest ein Fahrzeug (1) mit einer Fahrzeugelektronik (2) und zumindest ein weiteres Verkehrsobjekt (5), welche untereinander zum Datentransfer verbunden sind, wobei die Server (6, 7) dazu eingerichtet sind, untereinander Daten auszutauschen und von dem Fahrzeug (1) und zumindest einem weiteren Verkehrsobjekt (5) Daten zu empfangen und zu speichern sowie gespeicherte Daten von Verkehrsobjekten (1, 5) an Verkehrsobjekte (1, 5) zu liefern, und wobei die Fahrzeugelektronik (2) zumindest einen Sensor (3) zur Erfassung zumindest eines Parameters des Fahrzeugs (1) oder der Umgebung des Fahrzeugs (1), vorzugsweise dessen Position, aufweist, **dadurch gekennzeichnet, dass** zumindest ein erster Server (6) außerhalb des Fahrzeugs angeordnet ist und zumindest ein zweiter Server (7) im oder am Fahrzeug angeordnet ist, und dass der zweite Server (7) dazu eingerichtet ist, eine Lokalkopie zumindest eines Teils der Daten des ersten Servers (6) anzufertigen und zu speichern.

12. Kommunikationsnetzwerk nach Anspruch 11, **dadurch gekennzeichnet, dass** die Fahrzeugelektronik (2) mit dem zweiten Server (7) über zumindest eine Datenleitung verbunden ist.

13. Kommunikationsnetzwerk nach einem der Ansprüche 11 oder 12, **dadurch gekennzeichnet, dass** der erste Server (6) und der zweite Server (7) über eine drahtlose Verbindung verbunden oder verbindbar sind und dass vorzugsweise vorgesehen ist, dass der erste Server (6) und der zweite Server (7) jeweils Kommunikationseinheiten zur Kommunikation untereinander und/oder zur Kommunikation mit Verkehrsobjekten (1, 5) aufweisen.

14. Kommunikationsnetzwerk nach einem der Ansprüche 11 bis 13, **dadurch gekennzeichnet, dass** der erste Server (6) und der zweite Server (7) jeweils zumindest eine Datenspeichereinheit (7') zum Speichern von empfangenen Daten umfassen.

15. Kommunikationsnetzwerk nach einem der Ansprüche 11 bis 14, **dadurch gekennzeichnet, dass** der zweite Server (7) dazu eingerichtet ist, die Daten des ersten Servers (6), vorzugsweise kontinuierlich oder intermittierend, zumindest teilweise zu kopieren und/oder zu aktualisieren, solange der erste Server (6) und der zweite Server (7) in Verbindung stehen.
